# EUROPÄISCHE PATENTANMELDUNG

(11) **EP 3 593 955 A1**
(43) Veröffentlichungstag der Anmeldung: **15.01.2020**
(21) Anmeldenummer: 18182400.4
(22) Anmeldetag: 09.07.2018
(51) Int. Cl.: B25H 3/02, B25H 3/04

(54) **WANDBEFESTIGUNG**

(71) Anmelder: Hilti Aktiengesellschaft, 9494 Schaan (LI)
(72) Erfinder: Karlsson, Kenth, 88142 Wasserburg (DE)
(74) Vertreter: Hilti Aktiengesellschaft Corporate Intellectual Property

(57) **Zusammenfassung**

Verwendung eines Lastentransportwagens zum Transportieren von Lasten, vorzugsweise Werkzeugkoffern, als Regalsystem, wobei der Lastentransportwagen mittels wenigstens einer an einer Wand angeordneten verstellbaren Befestigungseinrichtung an der Wand befestigt wird.

## Beschreibung

Die vorliegende Erfindung betrifft die Verwendung eines Lastentransportwagens zum Transportieren von Lasten, vorzugsweise Werkzeugkoffern, als Regalsystem.

Lastentransportwagen der eingangs genannten Art sind beispielsweise in Form von Sackkarren grundsätzlich aus dem Stand der Technik bekannt.

Die sichere Befestigung eines beladenen Lastentransportwagens an einer Wand erweist sich oftmals als Problem, da mit Lasten beladene Lastentransportwagen leicht umfallen können, wenn diese nicht mehr von einem Benutzer geführt bzw. gehalten werden. Darüber müssen aus Sicherheitsgründen und insbesondere zum Vermeiden eines Umkippens eines beladenen Lastentransportwagens die Lasten von dem Lastentransportwagen genommen und anderweitig verstaut werden, wenn der Lastentransportwagen nicht mehr von einem Benutzer geführt bzw. gehalten wird. Ein spezielles Problem ergibt sich bei einem Transport eines mit Lasten beladenen Lastentransportwagens in einem Fahrzeug. Für einen sicheren Transport des Lastentransportwagens sowie der Lasten müssen zum einen die Lasten von dem Lastentransportwagen genommen und sicher verstaut werden und zum anderen auch der Lastentransportwagen gesichert werden.

Es ist die Aufgabe der vorliegenden Erfindung, das vorstehend genannte Problem zu lösen und insbesondere einen Lastentransportwagen zum Transportieren von Lasten, vorzugsweise Werkzeugkoffern, als Regalsystem bereitzustellen.

Diese Aufgabe wird gelöst durch die Verwendung des oben beschriebenen faltbaren Lastentransportwagens als Regalsystem. Dazu ist vorgesehen, den Lastentransportwagen mittels wenigstens einer an einer Wand angeordneten verstellbaren Befestigungseinrichtung an der Wand zu befestigen. Hierdurch kann zum einen eine sichere Positionierung als auch ein sicherer Transport der Lastentransportwagen mitsamt einer Last an einer Wand, insbesondere an einer Fahrzeugwand, ermöglicht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: einen erfindungsgemäßen Lastentransportwagen im auseinandergefalteten Gebrauchszustand in einer perspektivischen Vorderansicht von schräg unten,
- Fig. 2: einen erfindungsgemäßen Lastentransportwagen im auseinandergefalteten Zustand in einer frontalen Seitenansicht,
- Fig. 3: einen erfindungsgemäßen Lastentransportwagen im zusammengefalteten Gebrauchszustand in einer perspektivischen Seitenansicht von schräg oben,
- Fig. 4A-4E: einen beispielhaften Vorgang des Zusammenfaltens eines erfindungsgemäßen Lastentransportwagens vom auseinandergefalteten Gebrauchszustand in den zusammengefalteten Zustand,
- Fig. 5: einen voll beladenen erfindungsgemäßen Lastentransportwagen im auseinandergefalteten Gebrauchszustand in einer perspektivischen Vorderansicht von schräg unten,
- Fig. 6: einen mit einem Werkzeugkoffer beladenen erfindungsgemäßen Lastentransportwagen im auseinandergefalteten Gebrauchszustand in einer perspektivischen Vorderansicht von schräg oben,
- Fig. 7: einen erfindungsgemäßen Lastentransportwagen im auseinandergefalteten Gebrauchszustand in einer perspektivischen Rückansicht von schräg oben,

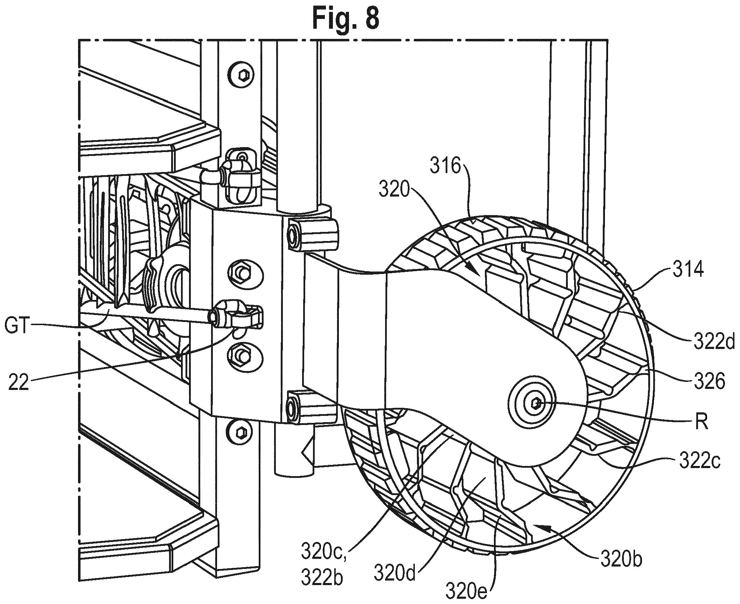

- Fig. 8: ein Rad eines erfindungsgemäßen Lastentransportwagens,
- Fig. 9A-9B: den erfindungsgemäßen Lastentransportwagen in einem von einer Befestigungseinrichtung beabstandeten Zustand und einem in die Befestigungseinrichtung eingehängten Zustand zum Verwenden des erfindungsgemäßen Lastentransportwagens als Regalsystem,
- Fig. 10: eine Draufsicht auf eine weitere Ausführungsform der Befestigungseinrichtung in Form eines separaten Halteelements;
- Fig. 11: eine weitere Draufsicht auf die weitere Ausführungsform der Befestigungseinrichtung in Form des separaten Halteelements, wobei ein Halteriegel des Halteelements im Uhrzeigersinn leicht verdreht ist;
- Fig. 12: eine weitere Draufsicht auf die weitere Ausführungsform der Befestigungseinrichtung in Form des separaten Halteelements, wobei der Halteriegel des Halteelements 90° im Uhrzeigersinn verdreht ist;

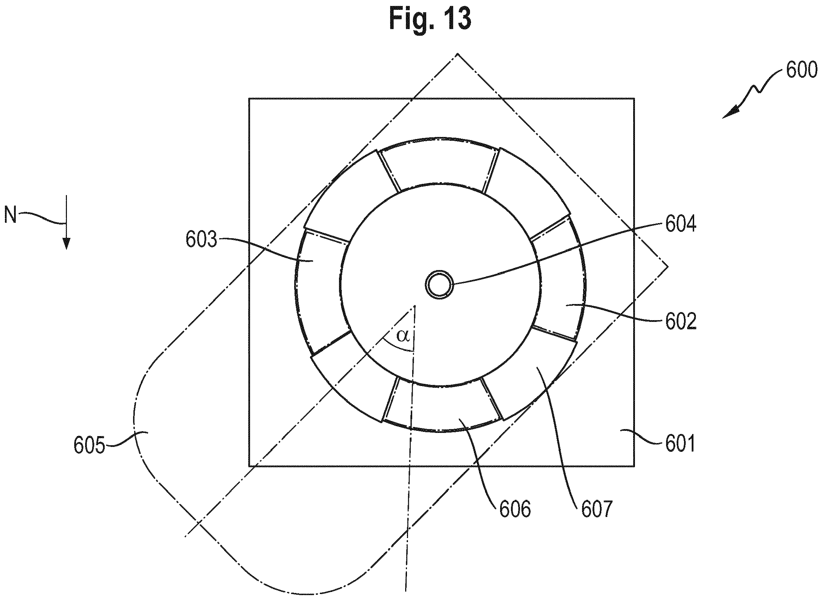

- Fig. 13: eine Draufsicht auf die weitere Ausführungsform der Befestigungseinrichtung in Form des separaten Halteelements mit einer Grundplatte, einem ersten Drehteller, einem zweiten Drehteller, einer Feder sowie einem Halteriegel,

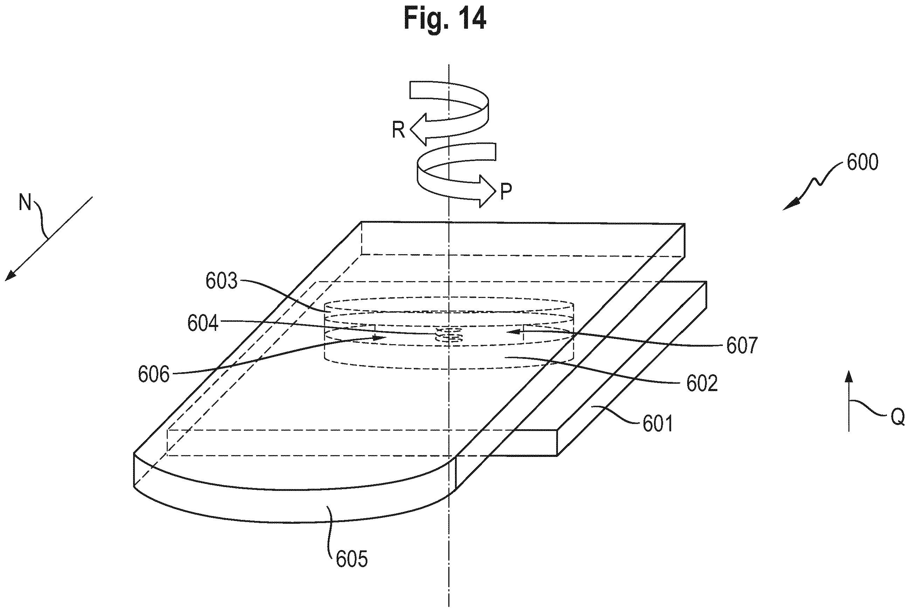

- Fig. 14: eine perspektivische Ansicht auf die weitere Ausführungsform der Befestigungseinrichtung in Form des separaten Halteelements mit der Grundplatte, dem ersten Drehteller, dem zweiten Drehteller, der Feder sowie dem Halteriegel,

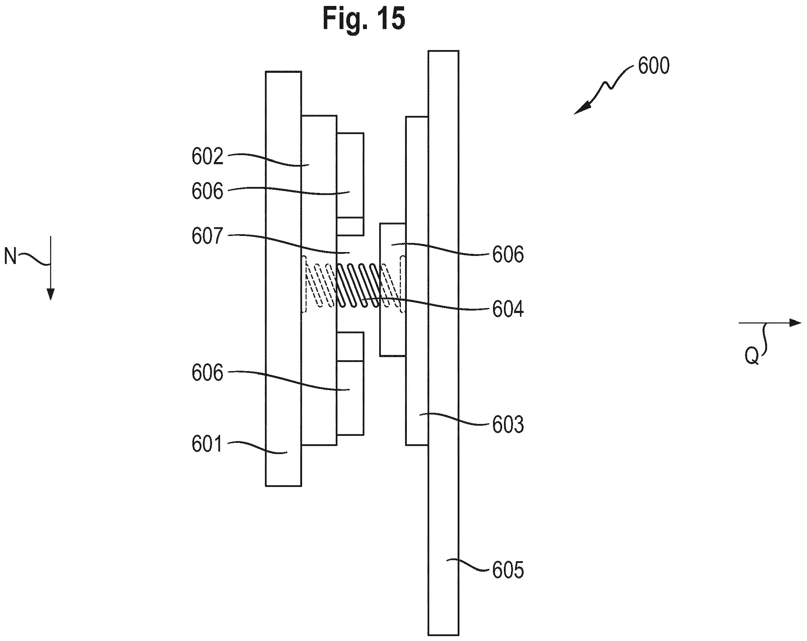

- Fig. 15: eine Seitenansicht auf die weitere Ausführungsform der Befestigungseinrichtung in Form des separaten Halteelements mit der Grundplatte, dem ersten Drehteller, dem zweiten Drehteller, der Feder sowie dem Halteriegel in einem auseinandergebauten Zustand, und

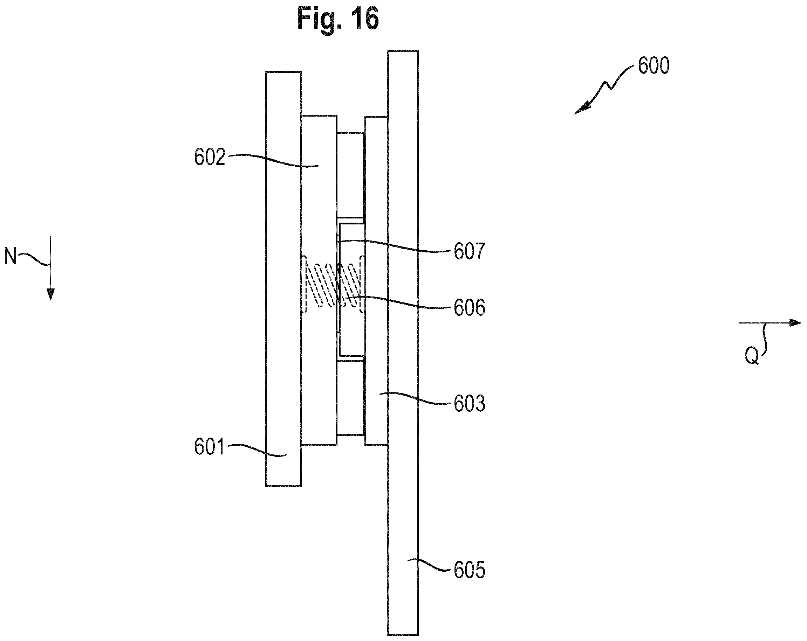

- Fig. 16: eine Seitenansicht auf die weitere Ausführungsform der Befestigungseinrichtung in Form des separaten Halteelements mit der Grundplatte, dem ersten Drehteller, dem zweiten Drehteller, der Feder sowie dem Halteriegel in einem zusammengebauten Zustand.

### Ausführungsbeispiel:

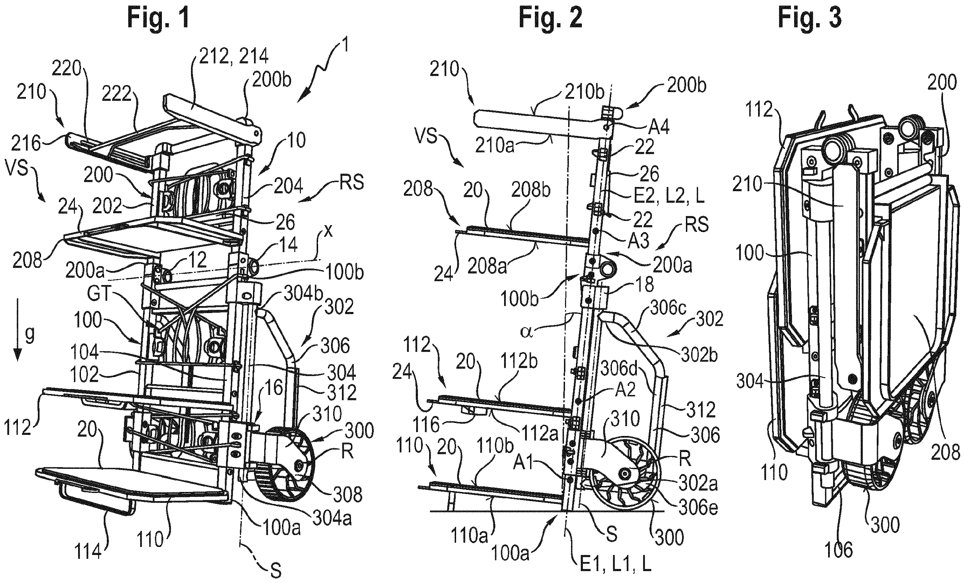

Ein Ausführungsbeispiel eines faltbaren Lastentransportwagens 1 ist in den Fig. 1 bis 3 dargestellt. Fig. 1 und 2 zeigen den Lastentransportwagen 1 in seinem auseinandergefalteten, aus einer vertikalen Lage leicht gekippten Gebrauchszustand, während Fig. 3 den zusammengefalteten Zustand des Lastentransportwagens 1 zeigt. Nachfolgend beziehen sich die Richtungsangaben "oben", "oberhalb", "unten" und "unterhalb" auf die Schwerkraftrichtung g.

Der Lastentransportwagen 1 umfasst einen Trägerrahmen 10. Der Trägerrahmen 10 umfasst wiederum einen sich in einer ersten Erstreckungsebene E1 erstreckenden ersten Trägerrahmenabschnitt 100 und einen sich in einer zweiten Erstreckungsebene E2 erstreckenden zweiten Trägerrahmenabschnitt 200. Zudem erstrecken sich der erste Trägerrahmenabschnitt 100 entlang einer ersten Längsrichtung L1 und der zweite Trägerrahmenabschnitt 200 entlang einer zweiten Längsrichtung L2. Der erste Trägerrahmenabschnitt 100 weist ein unteres Ende 100a und ein oberes Ende 100b auf. Ebenso weist der zweite Trägerrahmenabschnitt 200 ein unteres Ende 200a und ein oberes Ende 200b auf.

Der auseinandergefaltete Gebrauchszustand des Lastentransportwagens 1 definiert im Folgenden eine Vorderseite VS und eine Rückseite RS des Trägerrahmens 10 bzw. seiner ersten und zweiten Trägerrahmenabschnitte 100, 200.

An der Rückseite RS des ersten Trägerrahmenabschnitts 100 befinden sich zwei Räder 300, welche zum Verfahren des Lastentransportwagens 1 dienen. Die Ausgestaltung der Räder 300 des Lastentransportwagens 1 wird untenstehend noch detailliert beschrieben.

Wie aus den Fig. 1 bis 3 ersichtlich, weist der erste Trägerrahmenabschnitt 100 zwei parallel verlaufende Längsstreben 102, 104 auf, welche von einer unteren Querstrebe 106 am unteren Ende 100a des ersten Trägerrahmenabschnitts 100 und einer oberen Querstrebe 108 am oberen Ende 100b des ersten Trägerrahmenabschnitts 100 miteinander verbunden sind. Auf ähnliche Weise weist der zweite Trägerrahmenabschnitt 100 zwei parallel verlaufende Längsstreben 202, 204 auf, welche von einer oberen Querstrebe 206 am oberen Ende 200b des zweiten Trägerrahmenabschnitts 200 miteinander verbunden sind.

Die erste Längsstrebe 102 des ersten Trägerrahmenabschnitts 100 ist durch eine erste Gelenkverbindung 12 mit der ersten Längsstrebe 202 des zweiten Trägerrahmenabschnitts 200 gelenkig verbunden. Auf entsprechende Weise ist die zweite Längsstrebe 104 des ersten Trägerrahmenabschnitts 100 durch eine zweite Gelenkverbindung 14 mit der zweiten Längsstrebe 202 des zweiten Trägerrahmenabschnitts 200 gelenkig verbunden. Mit anderen Worten: Das untere Ende 200a des zweiten Trägerrahmenabschnitts 200 ist durch die zwei Gelenkverbindungen 12, 14 mit dem oberen Ende 100b des ersten Trägerrahmenabschnitts 100 gekoppelt. Im auseinandergefalteten Gebrauchszustand des Lastentransportwagens 1 definieren die Gelenkverbindungen 12, 14 eine im Wesentlichen horizontal verlaufende Trägerrahmenschwenkachse X zwischen erstem und zweitem Trägerrahmenabschnitt 100, 200. Auf diese Weise ist der zweite Trägerrahmenabschnitt 200 relativ zum ersten Trägerrahmenabschnitt 100 zwischen einer zusammengefalteten Position (Fig. 3) und einer auseinandergefalteten Position (Fig. 1 und 2) um die Trägerrahmenschwenkachse X schwenkbar.

Wie in den Fig. 1 und 2 zu sehen, liegt der zweite Trägerrahmenabschnitt 200 in seiner auseinandergefalteten Position oberhalb des ersten Trägerrahmenabschnitts 100. Die erste und zweite Erstreckungsebene E1, E2 des ersten bzw. zweiten Trägerrahmenabschnitts 100, 200 sind dabei im Wesentlichen parallel zueinander. Im auseinandergefalteten Gebrauchszustand des Lastentransportwagens 1 ist der zweite Trägerrahmenabschnitts 200 in seiner auseinandergefalteten Position. Zudem erstrecken sich im auseinandergefalteten Gebrauchszustand des Lastentransportwagens 1 der erste und zweite Trägerrahmenabschnitt 100, 200 bevorzugt entlang einer gemeinsamen Längsrichtung L, so dass die erste und zweite Längsrichtung L1, L2 zueinander koaxial sind.

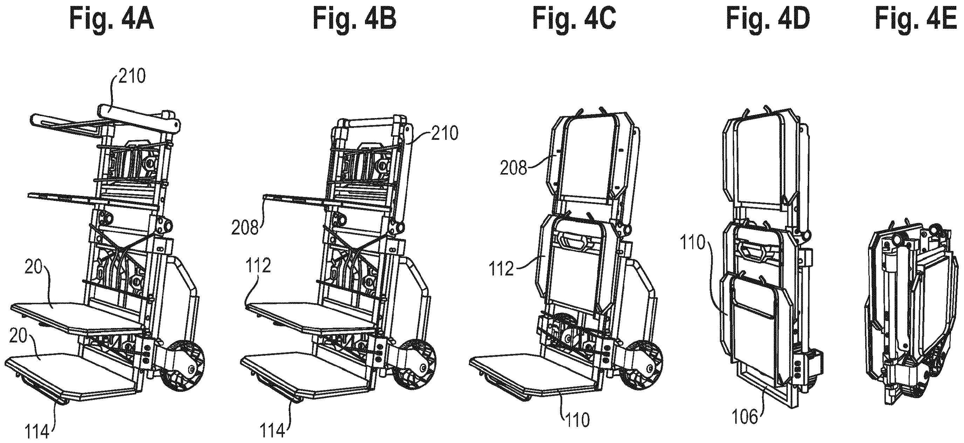

An der Vorderseite VS des ersten Trägerrahmenabschnitts 100 sind zwei Ablagen 110, 112 angeordnet. Die untere Ablage 110 des ersten Trägerrahmenabschnitts 100 ist nahe dem unteren Ende 100a des ersten Trägerrahmenabschnitts 100 und unterhalb der oberen Ablage 112 des ersten Trägerrahmenabschnitts 100 angeordnet. Die untere Ablage 110 ist um eine Schwenkachse A1 und die obere Ablage 112 ist um eine Schwenkachse A2 zwischen einer eingeklappten Position und einer ausgeklappten Position schwenkbar (Fig. 4A bis 4E).

Neben den beiden Ablagen 110, 112 des ersten Trägerrahmenabschnitts 100 weist auch der zweite Trägerrahmenabschnitt 200 an seiner Vorderseite VS zwei Ablagen 208, 210 auf. Die obere Ablage 210 des zweiten Trägerrahmenabschnitts 200 ist nahe dem oberen Ende 200b des zweiten Trägerrahmenabschnitts 200 und oberhalb der unteren Ablage 208 des zweiten Trägerrahmenabschnitts 200 angeordnet. Die untere Ablage 208 ist um eine Schwenkachse A3 und die obere Ablage 210 ist um eine Schwenkachse A4 zwischen einer eingeklappten Position und einer ausgeklappten Position schwenkbar (Fig. 4A bis 4E).

In den Fig. 1 und 2 sind die Ablagen 110, 112, 208, 210 in ihrer ausgeklappten Position senkrecht zur ersten und zweiten Erstreckungsebene E1, E2 des ersten bzw. zweiten Trägerrahmenabschnitts 100, 200 dargestellt. In ihrer ausgeklappten Position definieren die Ablagen 110, 112, 208, 210 des Trägerrahmens 10 bzw. des ersten und zweiten Trägerrahmenabschnitts 100, 200 jeweils eine nach unten weisende Unterseite 110a, 112a, 208a, 210a und eine nach oben weisende Oberseite 110b, 112b, 208b, 210b.

Um die beiden Ablagen 110, 112 des ersten Trägerrahmenabschnitts 100 und die untere Ablage 208 des zweiten Trägerrahmenabschnitts 200 aus ihrer ausgeklappten Position in die eingeklappte Position zu überführen, werden die Ablagen 110, 112, 208 jeweils nach oben, d.h. gegen die Schwerkraftrichtung g (im dargestellten Ausführungsbeispiel im Uhrzeigersinn), um eine der jeweiligen Ablage 110, 112, 208 zugeordnete Schwenkachse A1, A2, A3 verschwenkt. Um die beiden Ablagen 110, 112 des ersten Trägerrahmenabschnitts 100 und die untere Ablage 208 des zweiten Trägerrahmenabschnitts 200 in der jeweiligen eingeklappten Position sicher zu halten, sind Verriegelungsmittel vorgesehen. Die Schwenkbewegungen der Ablagen 110, 112, 208, 210 des Trägerrahmens 10 werden unten mit Bezug auf die Fig. 4A bis 4E näher erläutert.

Der Lastentransportwagen 1 umfasst ferner zwei Radaufhängungen 302, welche im Wesentlichen identisch zueinander aufgebaut sind. Im Folgenden wird deshalb nur auf die Konstruktion einer der Radaufhängungen 302 eingegangen.

Die Radaufhängung 302 umfasst eine sich in Längsrichtung L1 des ersten Trägerrahmenabschnitts 100 erstreckende erste Stange 304, welche ein oberes Ende 304b und ein unteres Ende 304a aufweist. Die erste Stange 304 ist nahe ihrem unteren Ende 304a in einem ersten Drehlager 16 gelagert. Das obere Ende 304b der Stange 304 ist in einem zweiten Drehlager 18 gelagert. Durch diese Anordnung wird eine sich entlang der Stange 304 erstreckende Radaufhängungsschwenkachse S definiert, um welche die Radaufhängung 302 schwenkbar ist.

Die Radaufhängungsschwenkachsen S der beiden Radaufhängungen 302 sind parallel zueinander und senkrecht zur Trägerrahmenschwenkachse X bzw. Längsrichtung L1 des ersten Trägerrahmenabschnitts 100. Durch die schwenkbare Lagerung der beiden Radaufhängungen 302 sind diese samt der Räder 300 unabhängig voneinander zwischen einer eingeklappten Position und einer ausgeklappten Position schwenkbar.

An der ersten Stange 304 der Radaufhängung 302 ist eine zweite Stange 306 angeformt. Genauer gesagt ist die zweite Stange 306 an ihrem oberen Ende 306b mit dem oberen Ende 304b der ersten Stange 304 und an ihrem unteren Ende 306a mit dem unteren Ende 304a der ersten Stange 304 integral verbunden. Die erste und zweite Stange 304, 306 liegen in einer gemeinsamen Erstreckungsebene. In der eingeklappten Position der Radaufhängungen 302 verläuft die von der ersten und zweiten Stange 304, 306 aufgespannte Erstreckungsebene parallel zur Erstreckungsebene E1 des ersten Trägerrahmenabschnitts 100 (Fig. 3).

Die zweite Stange 306 weist einen oberen Stangenabschnitt 306c, einen mittleren Stangenabschnitt 306d und einen unteren Stangenabschnitt 306e auf. Der obere Stangenabschnitt 306c kann beispielsweise als Griff für eine Bedienperson des Lastentransportwagens 1 dienen.

Der mittlere Stangenabschnitt 306d verläuft in einem Abstand parallel zur ersten Stange 304. Im dargestellten Ausführungsbeispiel ist an der von der Rückseite RS des ersten Trägerrahmenabschnitts 100 wegweisenden Seite des mittleren Stangenabschnitts 306d eine Gleitschiene 312 angebracht. Die zweite Stange 306 und die daran vorgesehene Gleitschiene 312 ermöglichen ein vereinfachtes Überwinden von Stufen oder anderen Hindernissen im Vergleich zu dem Fall, dass eine solche Konstruktion nicht vorhanden ist.

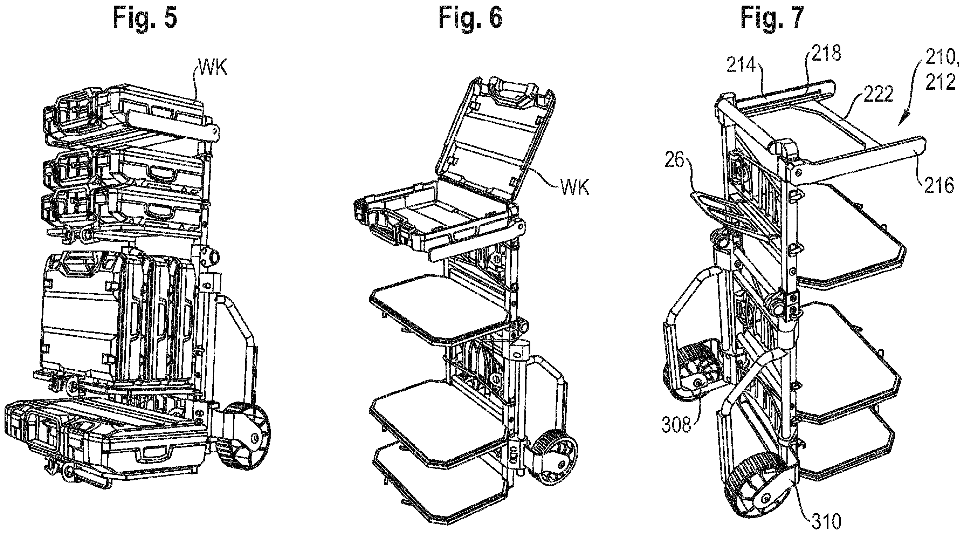

Der untere Stangenabschnitt 306e der zweiten Stange 306 ist mit einem ersten Stützarm 308 (Fig. 7) und der untere Stangenabschnitt der ersten Stange 304 ist mit einem zweiten Stützarm 310 integral verbunden. Zwischen dem ersten und zweiten Stützarm 308, 310 ist das Rad 300 der Radaufhängung 302 derart gelagert, dass das Rad 300 um eine Radachse R drehbar ist.

Die Radachsen R sind in der eingeklappten Position der Radaufhängungen 302 senkrecht zur ersten Erstreckungsebene E1, E2 des ersten Trägerrahmenabschnitts 100 und in der ausgeklappten Position der Radaufhängungen 302 parallel zur ersten Erstreckungsebene E1 des ersten Trägerrahmenabschnitts 100 angeordnet ist. Die beiden Radachsen R sind in der ausgeklappten Position der Radaufhängungen 302 koaxial zueinander.

Der Vorgang des Zusammenfaltens eines erfindungsgemäßen Lastentransportwagens 1 soll nun anhand der Fig. 4A bis 4E beschrieben werden.

Der in Fig. 4A dargestellte Lastentransportwagen 1 entspricht im Wesentlichen demjenigen der Fig. 1 und 2. Der Lastentransportwagen 1 der Fig. 4A befindet sich im auseinandergefalteten Gebrauchszustand, wobei alle seine Ablagen 110, 112, 208, 210 ausgeklappt sind, sich also in ihrer ausgeklappten Position befinden.

In dem in den Fig. 2 und 4A dargestellten auseinandergefalteten Gebrauchszustand des Lastentransportwagens 1 verlaufen die Längsrichtungen L1, L2 der ersten und zweiten Trägerrahmenabschnitte im Wesentlichen parallel zueinander und annähernd parallel zur Schwerkraftrichtung g. Die Abweichung von der vertikalen Ausrichtung des Lastentransportwagens 1 ist bedingt durch eine an der Unterseite 110a der unteren Ablage 110 des ersten Trägerrahmenabschnitts 100 angeordnete längliche Stützvorrichtung 114. Wie in den Fig. 2 und 4A zu erkennen, stützt sich der Lastentransportwagen 1 auf der Stützvorrichtung 114 sowie der unteren Querstange 106 und den unteren Enden der ersten und zweiten Längsstreben 102, 104 des ersten Trägerrahmenabschnitts 100 ab. Die Längsrichtungen L1, L2 schließen mit der Schwerkraftrichtung g einen Neigungswinkel α von etwa 6° ein. Im Gebrauch kann der Lastentransportwagen 1 aus diesem auseinandergefalteten Gebrauchszustand der Fig. 2 und 4A durch Abstützung auf den Rädern 300 verkippt werden, so dass sich der Neigungswinkel α von etwa 6° auf einen höheren Wert vergrößert. In den Fig. 2 und 4A berühren die Räder 300 den Boden nicht, sondern schweben in geringem Abstand oberhalb des Bodens. Die schwebende Anordnung der Räder 300 vereinfacht ein Verkippen des Lastentransportwagens 1 aus dem auseinandergefalteten Gebrauchszustand. Zum Kippen kann auch die unter Querstrebe 106 verwendet werden.

In Fig. 4B wurde die obere Ablage 210 des zweiten Trägerrahmenabschnitts 200 aus ihrer ausgeklappten Position in ihre eingeklappte Position verschwenkt. Der bei dieser Schwenkbewegung überstrichene Schwenkwinkel ist größer als 180°. Da in Fig. 4B die obere Ablage 210 des zweiten Trägerrahmenabschnitts 200 in der ausgeklappten Position im Wesentlichen senkrecht zur Erstreckungsebene E2 des zweiten Trägerrahmenabschnitts 200 ist, beträgt der von der oberen Ablage 210 zwischen den Darstellungen der Fig. 4A und 4B ausgeführte Schwenkwinkel im Wesentlichen 270°. Die obere Ablage 210 befindet sich in Fig. 4B auf der Rückseite RS des zweiten Trägerrahmenabschnitts 200.

In Fig. 4C wurden die untere Ablage 208 des zweiten Trägerrahmenabschnitts 200 und die obere Ablage 112 des ersten Trägerrahmenabschnitts 100 von der ausgeklappten Position in die eingeklappte Position bewegt. Der bei dieser nach oben gerichteten Schwenkbewegung überstrichene Schwenkwinkel beträgt im Wesentlichen 90°. In der eingeklappten Position kommen die Oberseite 112b der oberen Ablage 112 des ersten Trägerrahmenabschnitts 100 und die Oberseite 208b der unteren Ablage 208 des zweiten Trägerrahmenabschnitts 200 an der Vorderseite VS des Trägerrahmens 10 wenigstens teilweise zum Anliegen. Die obere Ablage 112 des ersten Trägerrahmenabschnitts 100 und die untere Ablage 208 des zweiten Trägerrahmenabschnitts 200 überlappen einander in ihren eingeklappten Positionen nicht.

In Fig. 4D wurde auch die untere Ablage 110 des ersten Trägerrahmenabschnitts 100 von ihrer ausgeklappten Position in ihre eingeklappte Position überführt. Wie bei der unteren Ablage 208 des zweiten Trägerrahmenabschnitts 200 und der oberen Ablage 112 des ersten Trägerrahmenabschnitts 100 wurde die untere Ablage 110 des ersten Trägerrahmenabschnitts 100 bei dieser Schwenkbewegung um einen Schwenkwinkel von im Wesentlichen 90° nach oben geklappt. Die Oberseite 110b der unteren Ablage 110 des ersten Trägerrahmenabschnitts 100 liegt in ihrer eingeklappten Position an der Unterseite 112a der oberen Ablage 112 des ersten Trägerrahmenabschnitts 100 an, zumindest insoweit die untere und obere Ablage 110, 112 des ersten Trägerrahmenabschnitts 100 einander in Längsrichtung L1 des ersten Trägerrahmenabschnitts 100 überlappen. Befinden sich die Ablagen 110, 112, 208, 210 in ihren eingeklappten Positionen, wie sie in Fig. 4D dargestellt sind, sind sie im Wesentlichen parallel zur ersten und zweiten Erstreckungsebene E1, E2 des ersten bzw. zweiten Trägerrahmenabschnitts 100, 200.

Außerdem wurden in Fig. 4D die beiden Radaufhängungen 302 um ihre jeweilige Radaufhängungsschwenkachse S aus der ausgeklappten Position in die eingeklappte Position verschwenkt.

Fig. 4E zeigt den zusammengefalteten Zustand des Lastentransportwagens 1. Um von der Anordnung der Fig. 4D zur Anordnung der Fig. 4E zu gelangen, wird der zweite Trägerrahmenabschnitt 200 um die Trägerrahmenschwenkachse X relativ zum ersten Trägerrahmenabschnitt 100 nach unten verschwenkt. Der Schwenkwinkel beträgt bei dieser Schwenkbewegung im Wesentlichen 180°.

Wie aus Fig. 4E ersichtlich, liegt in der zusammengefalteten Position des zweiten Trägerrahmenabschnitts 200 die Rückseite RS des zweiten Trägerrahmenabschnitts 200 der Rückseite RS des ersten Trägerrahmenabschnitts 100 gegenüber, so dass die zweite Erstreckungsebene E2 des zweiten Trägerrahmenabschnitts 200 im Wesentlichen parallel zur ersten Erstreckungsebene E1 des ersten Trägerrahmenabschnitts 100 angeordnet ist.

Durch die beschriebene faltbare Anordnung sowohl des zweiten Trägerrahmenabschnitts 200 relativ zum ersten Trägerrahmenabschnitts 100 als auch ihrer unteren und oberen Ablagen 110, 208, 112, 210 ist es möglich, den Lastentransportwagen 1 auf eine kompakte und gut handhabbare Größe zusammenzufalten. Dies erlaubt einen einfacheren Transport und ein platzsparendes Verstauen des Lastentransportwagens 1. Beispielsweise kann der zusammengefaltete Lastentransportwagen 1 selbst wie ein Koffer von einer Bedienperson mit einer Hand getragen werden.

Im dargestellten Ausführungsbeispiel hat der Lastentransportwagen 1 in seinem auseinandergefalteten Gebrauchszustand eine Gesamtlänge von etwa 1110 mm (gemessen in Längsrichtung L1, L2), eine Breite von etwa 693 mm (gemessen senkrecht zu den Erstreckungsebenen E1, E2) und eine Weite von etwa 664 mm (gemessen in Richtung der Trägerrahmenschwenkachse X). Im zusammengefalteten Zustand hat der Lastentransportwagen 1 eine Länge von etwa 725 mm (gemessen in Längsrichtung L1), eine Breite von etwa 201 mm (gemessen senkrecht zur Erstreckungsebene E1) und eine Weite von etwa 520 mm (gemessen in Richtung der Trägerrahmenschwenkachse X).

Die klappbare Ausgestaltung der Ablagen 110, 112, 208, 210 des Trägerrahmens 10 ermöglicht ein besonders flexibles Beladen des Lastentransportwagens 1 beispielsweise mit Werkzeugkoffern WK (Fig. 5). Je nachdem, welche der Ablagen 110, 112, 208, 210 ausgeklappt oder eingeklappt sind, können größere oder kleinere Werkzeugkoffer WK oder andere Lasten auf dem Lastentransportwagen 1 transportiert werden. Beispielsweise kann der Lastentransportwagen 1 in der in Fig. 4C dargestellten Anordnung der Ablagen 110, 112, 208, 210 eine besonders große Last auf der unteren Ablage 110 des ersten Trägerrahmenabschnitts 100 aufnehmen.

Die unter und obere Ablage 110, 112 des ersten Trägerrahmenabschnitts 100 und die untere Ablage 208 des zweiten Trägerrahmenabschnitts 200 sind als ebene Platten ausgebildet. Wie in Fig. 5 dargestellt, können auf diese drei Ablagen 110, 112, 208 beispielsweise Werkzeugkoffer WK liegend aufeinandergestapelt und stehend nebeneinander platziert werden. Auf den Oberseiten 110b, 112b, 208b der Ablagen 110, 112, 208 ist ein rutschhemmender Belag 20 aufgebracht.

Die Breite der Auflageflächen, d.h. der effektiv nutzbaren Fläche der Oberseiten 110b, 112b der unteren und oberen Ablage 110, 112 beträgt etwa 368 mm (gemessen jeweils senkrecht zur Erstreckungsebene E1) und die der unteren Ablage 208 beträgt etwa 343 mm (gemessen senkrecht zur Erstreckungsebene E2). Die Weite der Auflageflächen der Ablage 110, 112, 208 beträgt etwa 520 mm (gemessen in Richtung der Trägerrahmenschwenkachse X).

Zum Fixieren der Werkzeugkoffer WK auf den Ablagen 110, 112, 208 können Gurte GT zum Einsatz kommen (Fig. 1). Zum Anbringen von Gurten GT am Trägerrahmen 10 sind am ersten und zweiten Trägerrahmenabschnitt 100, 200 erste Kopplungsmittel 22 angeordnet, welche mit an einem Ende eines Gurtes vorgesehenen ersten Gegenkopplungsmitteln koppelbar sind. An den in der eingeklappten Position oberen Enden der Ablagen 110, 112, 208 des Trägerrahmens 10 sind zweite Kopplungsmittel 24 vorgesehen, welche mit zweiten Gegenkopplungsmitteln am anderen Ende des Gurtes GT lösbar verbunden werden können. Die Gurte GT können flexibel (z.B. aus Gummi) oder nicht flexibel (z.B. ausgestaltet als Spanngurte) sein.

Die obere Ablage 210 des zweiten Trägerrahmenabschnitts 200 unterscheidet sich strukturell von den anderen drei Ablagen 110, 112, 208 des Trägerrahmens 10. Die obere Ablage 210 des zweiten Trägerrahmenabschnitts 200 umfasst einen Stützrahmen 212, der zwei zueinander parallel verlaufende, mit dem zweiten Trägerrahmenabschnitt 200 gelenkig verbundene Führungsschienen 214, 216 aufweist. Der Stützrahmen 212 weist außerdem eine die beiden Führungsschienen 214, 216 an ihrer Unterseite 210a miteinander verbindende Querstrebe 222 auf. An den sich gegenüberliegenden Innenflächen der beiden Führungsschienen 214, 216 ist jeweils eine sich entlang der Längsrichtung der Führungsschienen 214, 216 erstreckende Führungsstruktur 218, 220 vorgesehen.

Ist ein Werkzeugkoffer WK, etwa entlang seiner Seitenflächen, mit zu den beiden Eingriffsstruktur 218, 220 der oberen Ablage 210 des zweiten Trägerrahmenabschnitts 200 komplementären Gegeneingriffsstrukturen versehen, so kann der Werkzeugkoffer WK liegend auf die ausgeklappte obere Ablage 210 geschoben werden (Fig. 5 und 6). Der Werkzeugkoffer WK wird dabei durch die Querstrebe 222 der oberen Ablage 210 und durch den Eingriff der Eingriffsstrukturen 218, 220 in die entsprechende Gegeneingriffsstruktur gehalten. Gurte, wie sie im Zusammenhang mit den anderen Ablagen 110, 112, 208 beschrieben wurden, sind bei der oberen Ablage 210 des zweiten Trägerrahmenabschnitts 200 nicht erforderlich. Dadurch erlaubt es die obere Ablage 210, den Werkzeugkoffer WK ohne Weiteres je nach Bedarf zu öffnen oder zu schließen (Fig. 6).

Um das Tragen des Lastentransportwagens 1 in seinem zusammengefalteten Zustand zu vereinfachen, ist an der Unterseite 112a der oberen Ablage 112 des ersten Trägerrahmenabschnitts 100 eine Griffanordnung 116 vorgesehen. Die Griffanordnung 116 ist derart angeordnet, dass in der eingeklappten Position der oberen und unteren Ablage 112, 110 des ersten Trägerrahmenabschnitts 100 die Griffanordnung 116 oberhalb des oberen Endes der unteren Ablage 110 liegt. Zudem ist die Griffanordnung 116 derart angeordnet, dass sie im zusammengefalteten Zustand des Lastentransportwagens 1 kurz unterhalb der Trägerrahmenschwenkachse X bzw. auf im Wesentlichen einer Höhe wie die obere Querstrebe 108 des ersten Trägerrahmenabschnitts 100 liegt. Die Griffanordnung 116 ragt nicht über das obere Ende der oberen Ablage 112 hervor und ist hintergreifbar ausgestaltet.

Wie in Fig. 7 zu erkennen, ist auf der Rückseite RS des zweiten Trägerrahmenabschnitts 200 eine Hakenvorrichtung 26 angeordnet, welche zwischen einer eingeklappten Position und einer ausgeklappten Position bewegbar ist. Die eingeklappte Position der Hackenvorrichtung 26 ist beispielsweise in Fig. 1 dargestellt. Die Hakenvorrichtung 26 kann zum Halten von Kabeln, Schläuchen oder dergleichen dienen.

Im Folgenden wird die Konstruktion der Räder 300 beschrieben, welche auch einen eigenständigen Aspekt der vorliegenden Erfindung darstellen kann. Da die Räder 300 identisch zueinander sind, wird nachfolgend nur auf eines der Räder 300 eingegangen.

Das Rad 300 umfasst einen kontinuierlichen, nicht-aufblasbaren bzw. nicht-pneumatischen Reifen 314 und eine Nabe 318, welche durch in gleichen Abständen angeordnete identische Speichen 320 miteinander verbunden sind. Der Reifen 314 hat eine profilierte Lauffläche 316. Der Reife 314, die Nabe 318 und die Speichen 320 sind integral miteinander ausgebildet. Das Rad 300 ist beispielsweise aus einem polymeren Material gebildet. Die Speichen 320 sind derart geformt, dass sie eine nachgiebige Abstützung liefern. Jede Speiche 320 weist ein der Nabe 318 näheres Ende 320a und ein dem Reifen 314 näheres Ende 320b auf und erstreckt sich in Längsrichtung entlang einer Erstreckungsfläche. Die Erstreckungsfläche einer Speiche 320 ist nicht gerade, sondern U-förmig oder umgekehrt U-förmig gekrümmt. Genauer weist jede Speiche 320 in Längsrichtung einen der Nabe 318 näheren Abschnitt 320c und einen dem Reifen 314 näheren Abschnitt 320e sowie einen zwischen diesen beiden Abschnitten 320c, 320e gelegenen mittleren Abschnitt 320d auf. Der der Nabe 318 nähere Abschnitt 320c und der dem Reifen 314 nähere Abschnitt 320e haben etwa die gleiche Länge und sind kürzer als der mittlere Abschnitt 320d (gemessen in Längsrichtung der Speiche 320). Ein Scharniergelenk 322b, 322c ist zwischen dem der Nabe 318 näheren Abschnitt 320c und dem mittleren Abschnitt 320d sowie zwischen dem Reifen 314 näheren Abschnitt 320e und dem mittleren Abschnitt 320d jeweils dadurch ausgebildet, dass die Querschnittsfläche der Speiche 320 (gemessen senkreckt zur Erstreckungsfläche der Speiche 320) im Bereich des Scharniergelenks 322b, 322c kleiner ist als außerhalb dieses Bereichs. Ein solches Scharnier wird auch als Filmscharnier bezeichnet. Im Verbindungsbereich zwischen Reifen 314 und Speiche 320 sowie zwischen Nabe 318 und Speiche 320 ist jeweils eine zur Speiche 320 hinweisende Erhebung 324 an der Nabe 318 bzw. Erhebung 328 am Reifen ausgebildet, an welche die Speiche 320 wieder durch ein Filmscharnier 322a, 322d angelenkt ist.

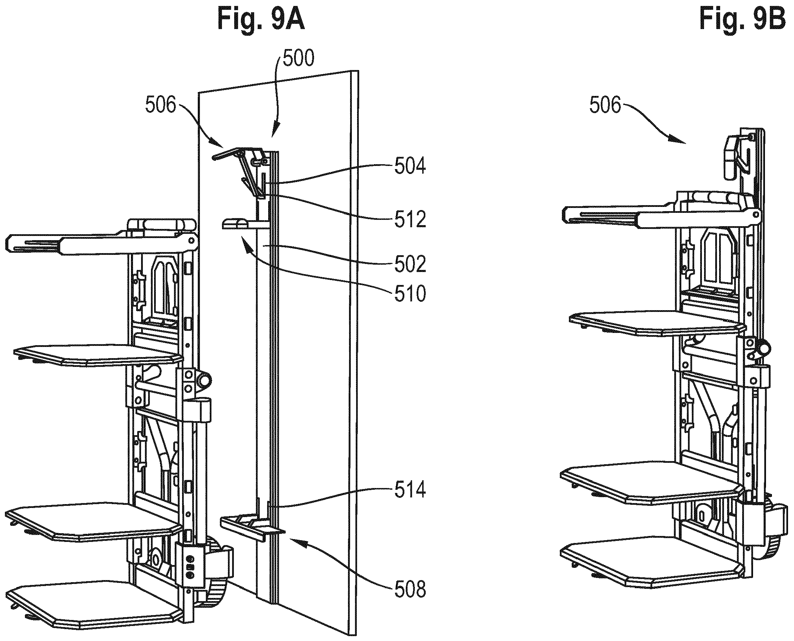

Der auseinandergefaltete Lastentransportwagen 1 eignet sich zur Verwendung als Regalsystem. Wie in Fig. 9A und 9B dargestellt, wird der Lastentransportwagen 1 dazu in seinem auseinandergefalteten Gebrauchszustand von einer an einer Wand fixierten Befestigungseinrichtung 500 gehalten. Die Befestigungseinrichtung 500 weist einen Balkenkörper 502 mit einem sich längs dem Balkenkörper 502 erstreckenden Führungskanal 504 auf. Eine am oberen Ende des Balkenkörpers 502 angeordnete Hebelanordnung 506 ist über in dem Führungskanal 504 verlaufende Verbindungsmittel 512 mit zwei Haltebügeln 508, 510 gekoppelt. Einer der Haltebügel 508 befindet sich am unteren Ende des Balkenkörpers, während der andere Haltebügel 510 am oberen Ende des Balkenkörpers 502 unterhalb der Hebelanordnung 506 angeordnet ist. Durch Betätigen der Hebelanordnung 506 sind die Haltebügel 508, 510 entlang des Balkenkörpers 502 in Führungsnuten 514 verfahrbar.

Die Hebelanordnung 506 ist zwischen einem gelösten Zustand (Fig. 9A) und einem gespannten Zustand (Fig. 9B) beweglich. Durch Überführen der Hebelanordnung 506 aus dem gelösten in den gespannten Zustand bewegen sich die Haltebügel 508, 510 entlang dem Balkenkörper 502 nach unten. Durch die Abwärtsbewegung der Haltebügel 508, 510 kann ein Lastentransportwagen 1 an der Befestigungseinrichtung 500 fixiert werden. Der obere Haltebügel 510 ist im dargestellten Ausführungsbeispiel dazu eingerichtet, mit der oberen Querstrebe 206 des zweiten Trägerrahmenabschnitts 200 in Eingriff zu kommen. Hingegen ist der untere Haltebügel 508 dazu eingerichtet, die Räder 300 der ihrem eingeklappten Zustand befindlichen Radaufhängung 302 von oben teilweise zu umgreifen.

Gemäß einer weiteren Ausführungsform der Befestigungseinrichtung 500 kann sowohl der untere Haltebügel 508 als auch der obere Haltebügel 510 als separates Halteelement 600 ausgestaltet sein. In einer speziellen Ausführungsform kann die Befestigungseinrichtung 500 dabei wenigstens ein einziges Halteelement 600, zwei Halteelemente 600 oder mehr als zwei Halteelemente 600 enthalten.

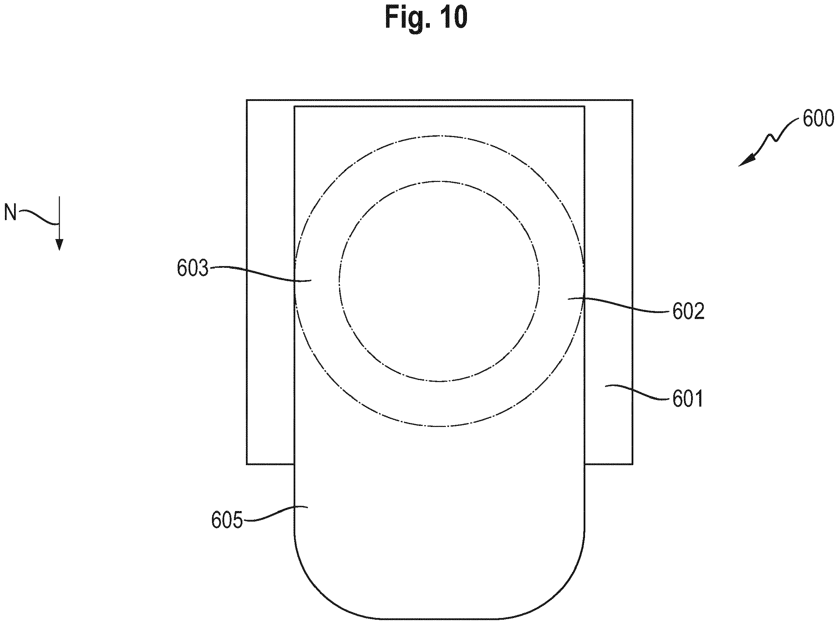

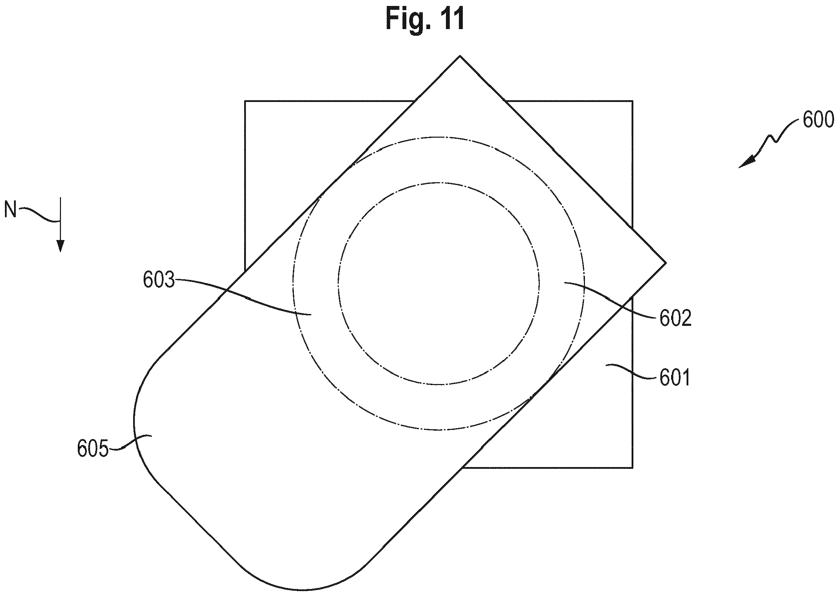

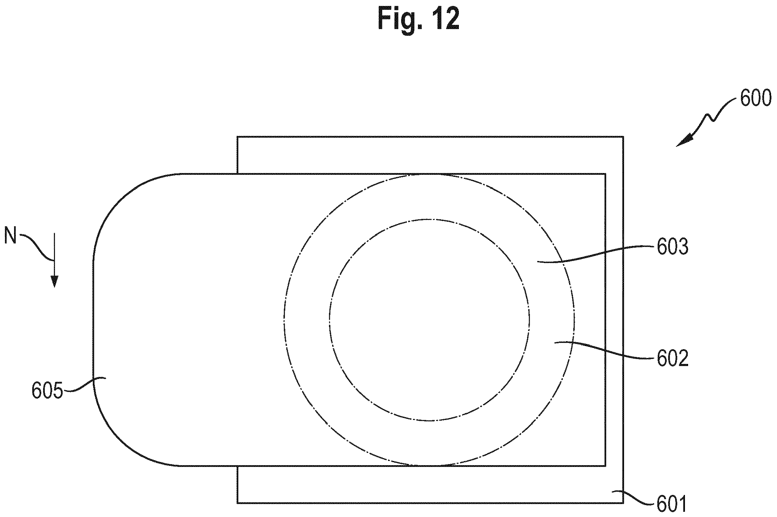

Wie in den Figuren 10 bis 12 gezeigt, enthält das Halteelement 600 eine Grundplatte 601, einen ersten Drehteller 602, einen zweiten Drehteller 603, eine Feder 604 sowie ein Halteriegel 605. Die Grundplatte 601 weist im Wesentlichen eine quadratische Grundfläche aus. Der Halteriegel 605 enthält eine längliche Grundfläche. Eine Kantenfläche des Halteriegels 605 ist dabei gekrümmt bzw. bogenförmig ausgestaltet.

Das Halteelement 600 kann mit Hilfe der Grundplatte 601 an einer Wand, insbesondere eine Fahrzeugwand, befestigt werden. Die Befestigung kann durch Schraubern erfolgen, die durch entsprechende Bohrlöcher der Grundplatte geführt werden. Die Bohrlöcher sind in den Figuren nicht dargestellt. Alternativ kann die Grundplatte 601 auch an eine Wand geklebt werden.

Der Halteriegel 605 dient zum Fixieren eines auseinandergefalteten oder zusammengefalteten Lastentransportwagen 1 an einer Wand. Hierzu greift eine Unterseite des Halteriegels 605 an die obere Querstrebe 206 des zweiten Trägerrahmenabschnitts 200 des Lastentransportwagens 1.

Der erste Drehteller 602 ist auf einer Oberseite der Grundplatte 601 und der zweite Drehteller 603 ist auf einer Unterseite des Halteriegels 605 positioniert.

Sowohl der erste Drehteller 602 als auch der zweite Drehteller 603 enthalten eine Vielzahl an Zähnen 606. Zwischen den Zähne 606 sind Zwischenräume 607 vorgesehen. Die Zähne 606 des ersten Drehtellers 602 erstrecken sich in Richtung Q von einer Oberseite des ersten Drehteller 602 und die Zähne 606 des zweiten Drehtellers 603 erstrecken sich entgegen der Richtung Q von einer Unterseite des zweiten Drehtellers 603. Die Zähne 606 des ersten und zweiten Drehtellers 602, 603 sind korrespondierend ausgestaltet. Jedoch sind die Zähne 606 jeweils so versetzt auf der Oberseite des ersten Drehteller 602 bzw. Unterseite des zweiten Drehtellers 603 angeordnet, dass die Zähne 606 der Drehteller 602, 603 in die jeweiligen Zwischenräume 607 zwischen den Zähnen 606 der Drehteller 602, 603 positionierbar sind. Mit Hilfe der Zähne 606 und der Zwischenräume 607 können die Drehteller 602, 603 in verschiedenen Winkelstellungen zueinander angeordnet werden.

Zwischen den beiden Drehteller 602, 603 ist eine Feder 604 angeordnet. Die Feder 604 ist in Form einer Zugfeder ausgestaltet und verbindet die beiden Drehteller 602, 603 miteinander. Die Enden der Feder 604 sind dabei jeweils drehbar über Drehlager mit den Drehtellern 602, 603 verbunden. Die Drehlager sind in den Figuren nicht dargestellt. Wie in den Figuren dargestellt können die beiden Drehteller 602, 603 in Richtung Q gegen die Zugkraft der Feder 604 auseinandergezogen werden. Durch das Auseinanderziehen der beiden Drehteller 602, 603 werden die Zähne 606 aus den Zwischenräumen 607 gezogen, sodass auch die Drehteller 602, 603 bzw. die Grundplatte 601 und der Halteriegel 605 voneinander getrennt werden können. Mit Hilfe der Drehlager können die Drehteller 602, 603 bzw. die Grundplatte 601 und der Halteriegel 605 relativ zueinander verdreht werden. Die Anordnung der Zähne 606 in den Zwischenräumen 607 kann in Drehrichtung R oder P frei gewählt werden, sodass die Grundplatte 601 und der Halteriegel 605 in einem Drehwinkel α zueinander angeordnet werden können.

Zum eigentlichen Fixieren eines Lastentransportwagen 1 an einer Wand wird der Halteriegel 605 zunächst von der Grundplatte 601 gegen die Federkraft der Feder 604 in Richtung Q gezogen, sodass die Zähne 606 aus den Zwischenräumen 607 bewegt werden. Anschließend wird der Halteriegel 605 in eine Drehrichtung R oder P gedreht. Durch das Drehen des Halteriegels 605 entsteht ein Freiraum zwischen Halteriegel 605 und Grundplatte 601, in den die die obere Querstrebe 206 des zweiten Trägerrahmenabschnitts 200 des Lastentransportwagens 1 positioniert werden kann. Der Halteriegel 605 wird anschließend wieder zurückgedreht, sodass die Querstrebe 206 zwischen Halteriegel 605 und Grundplatte 601 gehalten wird.

### Bezugszeichenliste

- 1: Lastentransportwagen
- g: Schwerkraftrichtung
- 10: Trägerrahmen
- 100: Erster Trägerrahmenabschnitt
- 200: Zweiter Trägerrahmenabschnitt
- E1: Erste Erstreckungsebene des ersten Trägerrahmenabschnitts
- E2: Zweite Erstreckungsebene des zweiten Trägerrahmenabschnitts
- L1: Erste Längsrichtung des ersten Trägerrahmenabschnitts
- L2: Zweite Längsrichtung des zweiten Trägerrahmenabschnitts
- 100b, 100a: oberes und unteres Ende des ersten Trägerrahmenabschnitts
- 200b, 200a: oberes und unteres Ende des zweiten Trägerrahmenabschnitts
- VS: Vorderseite des Trägerrahmens
- RS: Rückseite des Trägerrahmens
- 300: Räder
- 102, 104: erste und zweite Längsstreben des ersten Trägerrahmenabschnitts
- 202, 204: erste und zweite Längsstreben des zweiten Trägerrahmenabschnitts
- 106, 108: untere und obere Querstrebe des ersten Trägerrahmenabschnitts
- 206: obere Querstrebe des zweiten Trägerrahmenabschnitts
- 12, 14: erste und zweite Gelenkverbindung
- X: Trägerrahmenschwenkachse
- L: gemeinsame Längsrichtung
- 110, 112: untere und obere Ablage des ersten Trägerrahmenabschnitts
- 208, 210: untere und obere Ablage des zweiten Trägerrahmenabschnitts
- A1, A2, A3, A4: Schwenkachsen der Ablagen
- 110a, 112a, 208a, 210a: Unterseiten der Ablagen
- 110b, 112b, 208b, 210b: Oberseiten der Ablagen
- 302: Radaufhängungen
- 304, 306: erste und zweite Stange der Radaufhängung
- 304b, 304a: oberen und unteres Ende der ersten Stange
- 16, 18: Erstes und Zweites Drehlager
- S: Radaufhängungsschwenkachsen
- 306b, 306a: oberen und unteres Ende der zweiten Stange
- 308, 310: ersten und zweiter Stützarm
- 306c, 306d, 306e: oberer, mittlerer, unteren Stangenabschnitt der zweiten Stange
- 312: Gleitschiene
- WK: Werkzeugkoffer
- 20: Rutschhemmender Belag
- GT: Gurt
- 22: erste Kopplungsmittel am Trägerrahmen
- 24: zweite Kopplungsmittel an den Ablagen
- 114: Stützvorrichtung
- α: Neigungswinkel des Trägerrahmens
- 212: Stützrahmen
- 214, 216: Führungsschienen
- 218, 220: Eingriffsstrukturen
- 222: Querstrebe
- 116: Griffanordnung
- 314: Reifen
- 316: Lauffläche
- 318: Nabe
- 320: Speiche
- 322a, 322b, 322c, 322d: Scharniergelenke
- 320a: das der Nabe nähere Ende einer Speiche
- 320b: das dem Reifen nähere Ende einer Speiche
- 320c, 320d, 320e: Speichenabschnitte
- 324: Erhebung an der Nabe
- 326: Erhebung am Reifen
- 26: Hakenvorrichtung
- 500: Befestigungseinrichtung
- 502: Balkenkörper
- 504: Führungskanal
- 506: Hebelanordnung
- 508, 510: unterer und oberer Haltebügel
- 512: Verbindungsmittel
- 514: Führungsnuten
- 601: Grundplatte
- 602: erster Drehteller
- 603: zweiter Drehteller 603
- 604: Feder
- 605: Halteriegel
- 606: Zähne
- 607: Zwischenräume

## Patentansprüche

1. Verwendung eines Lastentransportwagens (1) zum Transportieren von Lasten, vorzugsweise Werkzeugkoffern (WK), als Regalsystem,
**dadurch gekennzeichnet, dass** der Lastentransportwagen (1) mittels wenigstens einer an einer Wand angeordneten verstellbaren Befestigungseinrichtung (500) an der Wand befestigt wird.
